# EUROPEAN PATENT SPECIFICATION

(11) **EP 3 751 813 B1**
(45) Date of publication and mention of the grant of the patent: **22.03.2023**
(21) Application number: 19180060.6
(22) Date of filing: 13.06.2019
(51) Int. Cl.: H04L 9/40, H04L 67/12, G06F 21/55

(54) **DEVICE AND METHOD FOR PERFORMING THREAT DETECTION AND/OR MITIGATION**
VORRICHTUNG UND VERFAHREN ZUR DURCHFÜHRUNG VON GEFAHRENERKENNUNG UND/ODER -ABSCHWÄCHUNG
DISPOSITIF ET PROCÉDÉ PERMETTANT D'EFFECTUER UNE DÉTECTION ET/OU ATTÉNUATION DE MENACES

(43) Date of publication of application: 16.12.2020
(73) Proprietor: ABB Schweiz AG, 5400 Baden (CH)
(72) Inventor: LOCHER, Thomas, 8050 Zürich (CH); PIGNOLET, Yvonne-Anne, 8808 Pfaeffikon (CH); FERRANTI, Ettore, 8165 Schleinikon (CH); EIDENBENZ, Raphael, 8049 Zürich (CH); SCHOENBORN, Sandro, 4059 Basel (CH)
(74) Representative: Zimmermann & Partner Patentanwälte mbB

(56) References cited:
- EP-A1- 2 657 880
- EP-A1- 2 779 569

## Description

### FIELD OF THE INVENTION

The invention relates to methods and devices for performing threat detection and optionally threat mitigation for industrial systems or power systems. The invention relates in particular to methods and devices that are operative to use cyber security information to perform threat detection.

### BACKGROUND OF THE INVENTION

Modem industrial system and power systems include a large number of physical devices that perform industrial processes or are operative to generate or distribute electric power. Industry robots, transformers, generators, switches, and other devices are exemplary for physical devices of an industrial or power system. In order to facilitate coordinated control of the physical devices, a computer system may be provided. State information and/or control commands may be conveyed via a communication network to monitor and/or control the industrial system or power system in a centralized manner.

Protection against unauthorized intrusion and/or fraudulent manipulation is of significant importance for both industrial and power systems.

Security tools, such as firewalls, antivirus software, and intrusion detection systems, help to protect systems, but still have their shortcomings. Particularly dangerous attacks are often built around one or more zero-day exploits, which make use of unknown system vulnerabilities. These attacks can often be initiated without detection by masking their true intent behind seemingly normal system operations. In some cases, even the effect of the attack, once it is triggered, remains undetected because it is itself hidden from the operators by manipulating the information the operators receive, e.g., from controllers, or by transitioning the system into a bad state in a manner that does not raise suspicion. One example for such an attack is Stuxnet, which exploited four zero-day vulnerabilities to send unexpected commands to programmable logic controllers (PLCs) in the infected system while returning normal operation status indicators to the operators.

EP 2 779 569 discloses a system includes a device monitoring component configured to measure control system behavior and an intrusion prevention system communicatively coupled to the device monitoring component and a communications network.

The intrusion prevention system includes a control system analysis component configured to analyze the control system behavior measured by the device monitoring component against a first rule set to determine whether an anomaly, an intrusion, or both are present.

EP 2 657 880 B1 discloses a method including receiving information from one or more sources. A cyber security event involving unauthorized access to a computer system by malicious software, and a physical security event involving unauthorized physical access to a physical vicinity of the computer system, are identified in the information. The cyber security event and the physical security event are correlated so as to detect an intrusion into the computer system.

One approach to further reduce the risk of unauthorized access or manipulation includes reducing the attack sources through system hardening and strict enforcement of access control policies. This approach also has its limitations. For illustration, it may not always be possible to enforce access control policies to a desired degree.

### SUMMARY

It is an object of the invention to provide improved methods and devices that facilitate the detection and/or mitigation of security threats. It is in particular an object of the invention to provide improved threat detection and optionally threat mitigation for systems that control a physical process, such as an industrial process, power generation, power distribution, or power transmission.

Devices and methods according to embodiments of the invention can combine security information related to a digital data processing and communication system with information obtained from a physical process, such as an industrial manufacturing process, other industrial processes, power generation, power distribution, or power transmission. The security information related to the data processing and communication system may be received from any one or any combination of multiple sources, including a security event logger, an intrusion detection system (IDS) and potentially other security tools and mechanisms.

Operation conditions and configurations related to the physical process (such as operating states of physical devices or sensor readings that relate to the physical process) are associated with security events.

The methods and devices according to embodiments may use methods for discovering relations among input variables such as, e.g., association rule learning and other machine learning approaches. This makes it possible to identify inconsistencies between the cyber security data and physical data or to identify indicators for an anomalous system state. This information can then be passed on to a monitoring station for further inspection. Additionally or alternatively, a mitigation strategy, i.e., a transition to a normal and safe state can be suggested or automatically implemented.

The methods and devices according to embodiments add a layer of protection to systems which include a physical subsystem that carries out a physical process. Substation automation systems, where the voltage and current measured on power lines depend on the states of circuit breakers, or factory management systems, where production data depends on the states of robots on the factory floor are examples for such systems. The state space of these systems is restricted by the physical processes. By taking information about the physical state into account when assessing the security situation, better decisions and mitigation approaches can be taken.

This enhances security. Elaborate attacks require that more system components are compromised in order for an attack to remain hidden from the devices and methods according to the invention, thus rendering the system more secure.

Embodiments of the invention may combine a traditional IDS and an independent machine-learning based approach, combining cyber and physical subsystem status information to perform enhanced threat detection and to optionally suggest techniques that mitigate a threat by moving the system back towards a safe operating state.

The invention is defined in the appended independent claims.

An analyzer according to an embodiment is operative to perform threat detection for a system that comprises a physical subsystem having a plurality of controllable devices and a cyber subsystem associated with the physical subsystem. The analyzer comprises at least one interface operative to receive cyber security information detected by an intrusion detection system associated with the cyber subsystem and physical subsystem information related to the physical subsystem. The analyzer comprises at least one integrated circuit coupled to the at least one interface and operative to process, in combination, the cyber security information and the physical subsystem information to perform the threat detection.

The at least one integrated circuit may be operative to process a feature set that is based on the physical subsystem information and a cyber security status derived from the cyber subsystem information to perform the threat detection.

The at least one integrated circuit may be operative to process time-dependent changes in the feature set to predict a security threat situation.

The at least one integrated circuit may be operative to use physical state variables of the physical subsystem as features of the feature set and/or to process the physical state variables of the physical subsystem into the features of the feature set.

The at least one integrated circuit may be operative to perform a state classification based on the feature set to perform the threat detection.

The at least one integrated circuit may be operative to execute a machine learning algorithm to continually update, during ongoing operation of the system, a state classification process that may be applied to the feature set.

The machine learning algorithm may comprise a neural network or association rule learning.

The at least one integrated circuit may be operative to perform a cluster analysis based on the feature set and the cyber security status to perform the threat detection.

The at least one integrated circuit may be operative to execute a machine learning algorithm to continually update, during ongoing operation of the system, a cluster analysis process that may be applied to the feature set and the cyber security status.

The at least one integrated circuit may be operative to determine a time-dependent change of the feature set in feature space to perform the threat detection.

The at least one integrated circuit may be operative to perform predictive threat detection based on the time-dependent change of the feature set in feature space.

The at least one integrated circuit may be operative to perform predictive threat detection based on a movement direction of the feature set in feature space.

The at least one integrated circuit may be operative to perform predictive threat detection based on a movement direction of the feature set in feature space relative to previously observed historical features sets.

The at least one integrated circuit may be operative to report results of the threat detection to a monitoring station of the system.

The analyzer may be operative to report the results of the threat detection in response to detecting that the feature set has a minimum distance to a feature set that is known to have a security threat. The distance between feature sets may be determined using a distance metric in a feature space spanned by the variables of the feature sets.

The analyzer may additionally or alternatively be operative to report the results of the threat detection in response to detecting that a point in feature space representing the feature set moves, as a function of time, in a direction towards a point in feature space representing a feature set that may be known to have a security threat.

The analyzer may additionally or alternatively be operative to report the results of the threat detection in response to detecting that a point in feature space associated with the feature set moves, as a function of time, in a direction away from all points in feature space representing previously recorded feature sets.

The analyzer may additionally or alternatively be operative to report the results of the threat detection in response to detecting that the feature set is inconsistent with the cyber security status.

The at least one integrated circuit may be operative to process, in combination, the cyber security information and the physical subsystem information to identify measures for mitigating a detected threat.

The at least one integrated circuit may execute a machine learning algorithm to determine the measures for mitigating the detected threat.

The at least one integrated circuit may be operative to receive information on operator actions in response to threats detected by the analyzer during operation of the system and to use the information on the operator action for training the machine learning algorithm.

A system according to an embodiment comprises a physical subsystem having a plurality of controllable devices. The system comprises a data collector operative to collect physical subsystem information related to the physical subsystem. The system comprises a cyber subsystem associated with the physical subsystem. The system comprises an intrusion detection system operative to detect cyber security information of the cyber subsystem. The system comprises the analyzer according to an embodiment. The at least one interface of the analyzer is communicatively coupled to the data collector.

The system may further comprise a security event logger coupled to the intrusion detection system and to a database that stores the cyber security information. The at least one interface of the analyzer may be communicatively coupled to the security event logger and/or the database.

The cyber subsystem may be an industrial automation control system comprising at least one IED.

The physical subsystem may be an industrial system and the cyber subsystem may be an industrial automation control system (IACS).

The physical subsystem may be an electric power generation and/or distribution system and the cyber subsystem may comprise a communication network interconnecting controllers and sensors of the electric power generation and/or distribution system.

The physical subsystem may be a power substation and the cyber subsystem may comprise a substation automation system.

The data collector and analyzer may be independent computing devices.

The independent computing devices that implement the data collector and analyzer may run different operating systems.

A method according to an embodiment performs threat detection for a system that comprises a physical subsystem having a plurality of controllable devices and a cyber subsystem associated with the physical subsystem. The method comprises receiving, by an analyzer, cyber security information detected by an intrusion detection system associated with the cyber subsystem and physical subsystem information associated with the physical subsystem. The method comprises processing, by the analyzer, the cyber security information and the physical subsystem information in combination to perform the threat detection.

The method may comprise processing, by the analyzer, a feature set that is based on the physical subsystem information and a cyber security status derived from the cyber subsystem information to perform the threat detection.

The method may comprise processing, by the analyzer, time-dependent changes in the feature set to predict a security threat situation.

The method may comprise using, by the analyzer, physical state variables of the physical subsystem as features of the feature set and/or processing the physical state variables of the physical subsystem into the features of the feature set.

The method may comprise performing, by the analyzer, a state classification based on the feature set to perform the threat detection.

The method may comprise executing, by the analyzer, a machine learning algorithm to continually update, during ongoing operation of the system, a state classification process that may be applied to the feature set.

The machine learning algorithm may comprise a neural network or association rule learning.

The method may comprise performing, by the analyzer, a cluster analysis based on the feature set and the cyber security status to perform the threat detection.

The method may comprise executing, by the analyzer, a machine learning algorithm to continually update, during ongoing operation of the system, a cluster analysis process that may be applied to the feature set and the cyber security status.

The method may comprise determining, by the analyzer, a time-dependent change of the feature set in feature space to perform the threat detection.

The method may comprise performing, by the analyzer, predictive threat detection based on the time-dependent change of the feature set in feature space.

The method may comprise performing, by the analyzer, predictive threat detection based on a movement direction of the feature set in feature space.

The method may comprise performing, by the analyzer, threat detection based on a movement direction of the feature set in feature space relative to previously observed historical features sets.

The method may comprise reporting, by the analyzer, results of the threat detection to a monitoring station of the system.

The method may comprise reporting, by the analyzer, the results of the threat detection in response to detecting that the feature set has a minimum distance to a feature set that is known to have a security threat. The distance between feature sets may be determined using a distance metric in a feature space spanned by the variables of the feature sets.

The method may additionally or alternatively comprise reporting, by the analyzer, the results of the threat detection in response to detecting that a point in feature space representing the feature set moves, as a function of time, in a direction towards a point in feature space representing a feature set that may be known to have a security threat.

The method may additionally or alternatively comprise reporting, by the analyzer, the results of the threat detection in response to detecting that a point in feature space associated with the feature set moves, as a function of time, in a direction away from all points in feature space representing previously recorded feature sets.

The method may additionally or alternatively comprise reporting, by the analyzer, the results of the threat detection in response to detecting that the feature set is inconsistent with the cyber security status.

The method may comprise processing, by the analyzer, in combination, the cyber security information and the physical subsystem information to identify measures for mitigating a detected threat.

The method may comprise executing, by the analyzer, a machine learning algorithm to determine the measures for mitigating the detected threat.

The method may comprise receiving, by the analyzer, information on operator actions in response to threats detected by the analyzer during operation of the system and using the information on the operator action for training the machine learning algorithm.

The method may comprise causing, by a security event logger coupled to the intrusion detection system and to a database, the cyber security information to be stored in the database. At least one interface of the analyzer may be communicatively coupled to the intrusion detection system and/or the database.

In the method, the cyber subsystem may be an industrial automation control system comprising at least one 1ED.

In the method, the physical subsystem may be an industrial system and the cyber subsystem may be an IACS.

In the method, the physical subsystem may be an electric power generation and/or distribution system and the cyber subsystem may comprise a communication network interconnecting controllers and sensors of the electric power generation and/or distribution system.

In the method, the physical subsystem may be a power substation and the cyber subsystem may comprise a substation automation system.

The data collector and analyzer may be independent computing devices.

The independent computing devices that implement the data collector and analyzer may run different operating systems.

Various effects and advantages are attained by the method, device, and system according to embodiments. Threat detection is improved. A number of false negatives can be reduced by taking into consideration the physical subsystem state when performing threat detection. Threat mitigation can optionally be improved by proposing transition options to return the system back to a safe state. The method, device, and system can detect attacks that would not be detected by traditional intrusion detection systems alone.

The method, device, and system according to embodiments make the operation of a system, such as a substation, more secure. Severe system attacks are harder to carry out, resulting in improved operation safety of industrial systems or power systems.

### BRIEF DESCRIPTION OF THE DRAWINGS

The subject-matter of the invention will be explained in more detail with reference to preferred exemplary embodiments which are illustrated in the attached drawings, in which:
Figure 1 is a schematic representation of a system comprising an analyzer according to an embodiment.
Figure 2 is a schematic representation of a system comprising an analyzer according to an embodiment.
Figure 3 is a block diagram of an analyzer according to an embodiment.
Figure 4 is a schematic representation illustrating operation of an analyzer according to an embodiment.
Figure 5 is a flow chart of a method according to an embodiment.
Figure 6 is a schematic representation of a feature space for explaining the operation of the analyzer according to an embodiment.
Figure 7 is a schematic representation of a feature space for explaining the operation of the analyzer according to an embodiment.
Figure 8 is a schematic representation of a feature space for explaining the operation of the analyzer according to an embodiment.
Figure 9 is a flow chart of a method according to an embodiment.
Figure 10 is a flow chart of a method according to an embodiment.

### DETAILED DESCRIPTION OF EMBODIMENTS

Exemplary embodiments of the invention will be described with reference to the drawings in which identical or similar reference signs designate identical or similar elements. While some embodiments will be described in the context of an industrial system, a power generation system, a power transmission system, or a power distribution system, the methods and devices described in detail below may be used in a wide variety of system.

The features of embodiments may be combined with each other, unless specifically noted otherwise.

Embodiments of the invention provide devices and methods that improve threat detection. An analyzer combines cyber security information relating to a cyber subsystem with state information relating to the physical devices and/or physical process in a physical subsystem.

The terms "physical subsystem" and "physical devices" are used herein to refer to components such as robots, circuit breakers, transformers, etc. that affect and carry out an industrial process (such as a manufacturing process) or a power generation or distribution process in a power grid. The "physical devices" perform actions other than data processing, forwarding, and storage.

It is understood that the components of a cyber subsystem, such as programmable logic devices or computers, are also embodied as tangible devices. For ease of understanding and better clarity, the term "physical device" as used herein is not intended to refer to devices that exclusively perform data processing, forwarding, and storage, as is the case for the programmable logic devices or computers of the cyber subsystem.

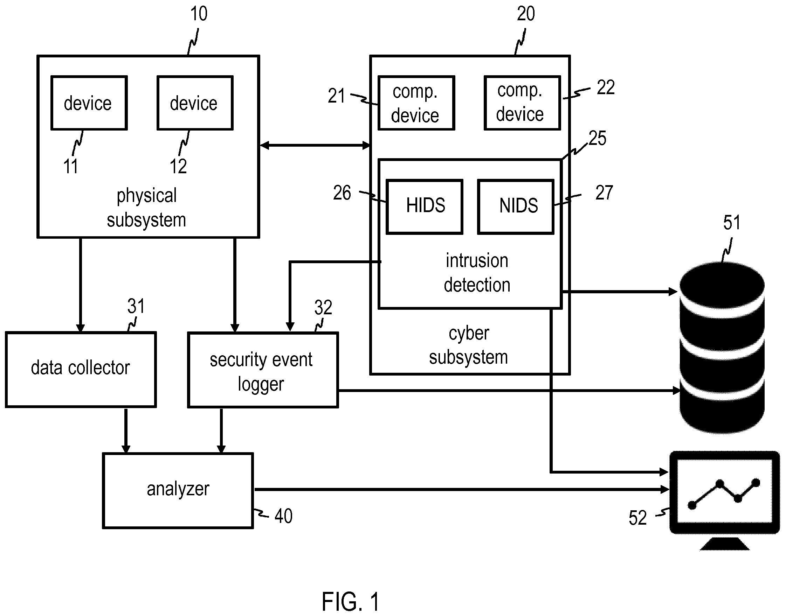

Fig. 1 is a schematic representation of a system according to an embodiment. The system comprises a physical subsystem 10 and a cyber subsystem 20.

The physical subsystem 10 is operative to carry out a physical process. The physical subsystem 10 includes a plurality of physical devices 11, 12. The devices 11, 12 may include mechanically movable components. When the physical subsystem 10 is a power system, the devices 11, 12 may include bus bars, transformers, switches and other components used for power generation, distribution and/or transmission. When the physical subsystem 10 is a factory floor or production line, the devices 11, 12 may include robots.

The possible states of the system are limited in state space by the physical process and the layout of the devices 11, 12. For illustration, for a substation automation system, the voltage and current measured on power lines depends on the states of circuit breakers. For factory management systems, production data depends on the states of robots on the factory floor. The state space of these systems is restricted by the physical processes carried out in the physical subsystem 10. By taking information about the state of the physical subsystem 10 into account when assessing the security situation, better decisions and mitigation approaches can be taken, as will be explained in detail below.

A cyber subsystem 20 is associated with the physical subsystem 10. The cyber subsystem 20 comprises computing devices 21, 22 that are responsible for processing and communicating information relating to the devices 11, 12 in the physical subsystem.

The physical subsystem 10 and cyber subsystem 20 may have various implementations. For example, the physical subsystem 10 may be an industrial system and the cyber subsystem 20 may be an industrial automation control system (IACS). The physical subsystem 10 may be an electric power generation and/or distribution system and the cyber subsystem 20 may comprise a communication network interconnecting controllers and sensors of the electric power generation and/or distribution system. The physical subsystem 10 may be a power substation and the cyber subsystem 20 may comprise a substation automation system.

The cyber subsystem 20 may have an intrusion detection system (IDS) 25. The IDS 25 may include a host-based intrusion detection system (HIDS) 26 and/or or a network-based intrusion detection system (NIDS) 271. The cyber subsystem 20 may optionally have an intrusion prevention system (IPS). Detected and prevented intrusions can be logged in a database 51 and can be reported to a monitoring station 52 in order to alert operators and/or trigger actions.

According to the present invention, a data collector 31 collects information about the physical subsystem 10. The collected information may comprise sensor readings, parameters included in commands to the physical devices 11, 12,

The data collector 31 may be operative to periodically collect the information about the physical subsystem 10. The data collector 31 may forward this information, possibly after processing, to an analyzer 40. The data collector 31 may clean, compress, or otherwise process the collected information about the physical subsystem 10 before forwarding it to the analyzer 40. The data collector 31 may be operative to forward the information about the physical subsystem 10 to the analyzer 40 as time-series data. The data collector 31 may be operative to forward the information about the physical subsystem 10 to the analyzer 40 as packetized data or as a data stream without packetization.

A security event logger 32 can collect security-relevant events from the physical subsystem 10. Configuration changes and user access, e.g. to restricted access areas, are exemplary for such security-relevant events from the physical subsystem 10. The security event logger 32 can collect security-relevant events from the IDS 25. The security-relevant events from the IDS 25 can include reported suspicious events. The security event logger 32 can forward the security-relevant events from the physical subsystem 10 and the security-relevant events from the IDS 25 to the analyzer 40. The security event logger 32 can compress or otherwise process the information prior to forwarding it to the analyzer 40.

The data collector 31 and/or security event logger 32 may be components that are provided separately and independently of the analyzer 40. For illustration, the data collector 31, security event logger 32, and analyzer 40 may be implemented on different computing devices running different operating systems. Security is thereby enhanced.

The analyzer 40 is operative to process, in combination, the cyber security information detected by the IDS 25 and the physical subsystem information collected by the data collector 31 to perform threat detection and, optionally, determine suitable measures that can bring the system back to a safe operating state.

The analyzer 40 can be operative to determine related sets of features obtained from the data collector 31. These feature sets can contain either plain measurements or information derived from the measurements, e.g., metrics or aggregates. The processing of measurements into feature sets can be done by the data collector 31 and/or the analyzer 40.

In order to determine relationships between feature sets, the analyzer 40 can be operative to perform classification and/or clustering functions. The analyzer 40 can be operative to use association rule learning or cluster analysis algorithms to perform classification or derive clusters. Related feature sets differ only slightly, e.g., the reported system measurements are almost the same across all features, and these features are observed for a certain security status. The security status can be fully or partially predefined. For illustration, a pre-defined set of security status values such as "normal", "abnormal", "critical", etc., can be defined. More abstract values quantifying the security status can be used. The security status can correspond to an identifier of a class of features obtained in the clustering. When a pre-defined set of security status values is used, the analyzer 40 may map clusters to the security status values in a second step, i.e., a classification step is performed by the analyzer 40.

The analyzer 40 may be operative to periodically update the association of observed features and security events. Thus, the analyzer 40 can adapt to changing conditions. The analyzer 40 may be operative to execute a machine learning algorithm. The classification and/or clustering method applied to the physical subsystem information and cyber security information can be adapted thereby. The analyzer 40 may be coupled to a monitoring station 52 and may be operative to detect user responses to certain situations. In this way, the analyzer 40 can learn to better distinguish security threats from safe conditions. The analyzer 40 can optionally also learn suitable response actions, based on previously taken actions of a human operator at the monitoring station 52.

The analyzer 40 may use any one of a variety of criteria, or any combination of such criteria, to perform threat detection. For illustration, the analyzer 40 may determine whether a feature set derived from the physical subsystem data provided by the data collector 31 and optionally from the cyber security data provided by the security event logger 32 is in a region in feature space that is known to correspond to secure states or a state that is not known to be secure (which represents a security threat), based on previous observations. Alternatively or additionally, the analyzer 40 may monitor time-dependent changes of the feature set, which correspond to a movement of a point in feature space. The analyzer 40 may determine whether the point in feature space moves towards a region in feature space that is known to correspond to a state that is known to be not secure (which represents a security threat). The analyzer 40 may determine whether the point in feature space moves away from all previously recorded points in feature space (which represents a security threat). The analyzer 40 may determine whether the physical subsystem information collected by the data collector 31 and the cyber security information collected by the IDS 25 are inconsistent (which represents a security threat).

The analyzer 40 can report any unexpected observation to the monitoring station 52. Information on the user response at the monitoring station 52 can be fed back into a machine learning algorithm at the analyzer 40 to improve the accuracy of threat detection and/or the automatic suggestion of threat mitigation strategies.

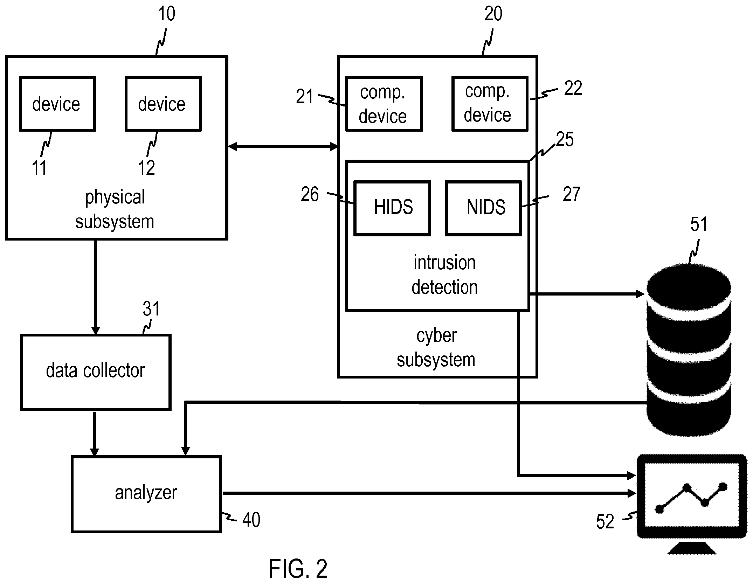

Figure 2 shows a system according to another embodiment. In the system of Figure 2, the analyzer 40 can read cyber security information from the database 51. A separate security event logger is not needed, which reduces the number of system components but adds more functionality and thus complexity to the analyzer 40.

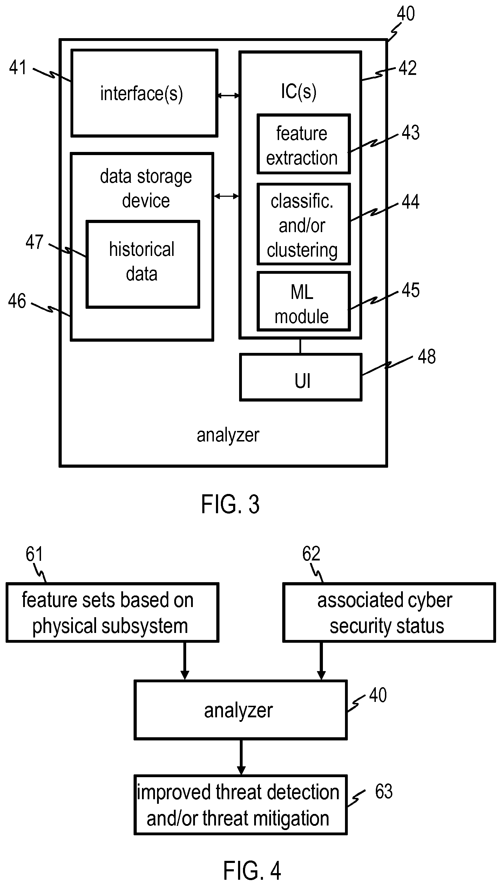

Figure 3 is a block diagram of an analyzer 40 according to an embodiment.

The analyzer 40 comprises one or several interfaces 41. The interface(s) 41 are operative to receive physical subsystem information representing the state of the physical subsystem 10. In operation of the analyzer 40, the interface(s) 41 may be coupled to the data collector 31 to receive the physical subsystem information. The interface(s) 41 may be operative to receive cyber security information related to the cyber subsystem 20. In operation of the analyzer 40, the interface(s) 41 may be coupled to the security event logger 32 and/or the database 51 to receive the cyber security information.

The analyzer 40 may comprise one or several integrated circuits (ICs) 42. The IC(s) 42 may comprise any one or any combination of a processor, a microprocessor, a controller, a microcontroller, an application specific integrated circuit (ASIC), or other integrated semiconductor circuits.

The IC(s) 42 may be operative to execute a feature extraction module 43. The feature extraction module 43 may use the physical subsystem information representing the state of the physical subsystem 10 to generate a feature set. Security related information related to the physical subsystem 10 and collected by the security event logger 32, such as user access to restricted areas, may also be processed into the feature set. The feature set may be an n-tuple of numerical values.

The feature set may be determined by the IC(s) in a recurrent manner, e.g., periodically.

The determination of the feature set may be adapted in a time-dependent manner. For illustration, the IC(s) 42 may execute a principal component analysis (PCA) or rule learning to determine combinations (such as linear combinations) of parameters of the physical subsystem 10 that are of particular importance for threat detection. The IC(s) 42 may adapt the PCA or any other technique that is used to generate the feature set for security analysis from measurements performed in the physical subsystem 10, using machine learning. Association rule learning or neural networks may be employed to modify the manner in which the feature set is generated. Operator actions at the monitoring station 52 may serve as feedback for the machine learning.

The IC(s) 42 may be operative to execute a classification and/or clustering function 44. The classification may use the feature set derived from the physical subsystem information and information from the IDS 25 as input to classify a state of the system as being a (potential) threat or as being a safe state. More granularity may be used when classifying states, e.g., by classifying the feature set to belong to one of at least two or more pre-defined security classes or by determining a numerical value that quantifies the security as determined by the analyzer 40 on a continuous or quasi-continuous scale of values.

Clustering may be performed using the feature set derived from the physical subsystem information and information from the IDS 25 as input. Clusters may be identified in a feature space. In a subsequent stage, the clusters may be associated with least two or more pre-defined security classes or other indicators for the security state.

The IC(s) 42 may be operative to execute a machine learning algorithm 45. Machine learning may be used to improve the feature extraction 43, the classification and/or clustering 44, but also for learning which response strategies could be suggested to the operator of the monitoring station 52 to bring the system back to a secure state.

The analyzer 40 may comprise a non-volatile data storage device or memory 46. The non-volatile data storage device or memory 46 may store historical data 47. The historical data 47 may indicate previously recorded feature sets derived from the physical subsystem information and information from the IDS 25 in combination with previously recorded operator actions at the monitoring station 52. The historical data 47 may be used to facilitate the classification to perform threat detection. The historical data 47 may be used to train the machine learning algorithm(s) during ongoing operation of the physical subsystem 10 and the cyber subsystem 20.

The analyzer 40 may optionally have a user interface 48. The user interface 48 may allow an operator to control operation of the analyzer 40 and/or to receive status or security related information.

Figure 4 is a schematic block diagram representing operation of the analyzer 40. The analyzer 40 uses feature sets 61 that are determined based on the physical subsystem information as input. The analyzer 40 uses associated cyber security status information 62 as input. The analyzer 40 is operative to process this information in combination to provide an output 63 to the monitoring station. The output 63 is the result of an improved threat detection and/or threat mitigation suggestion.

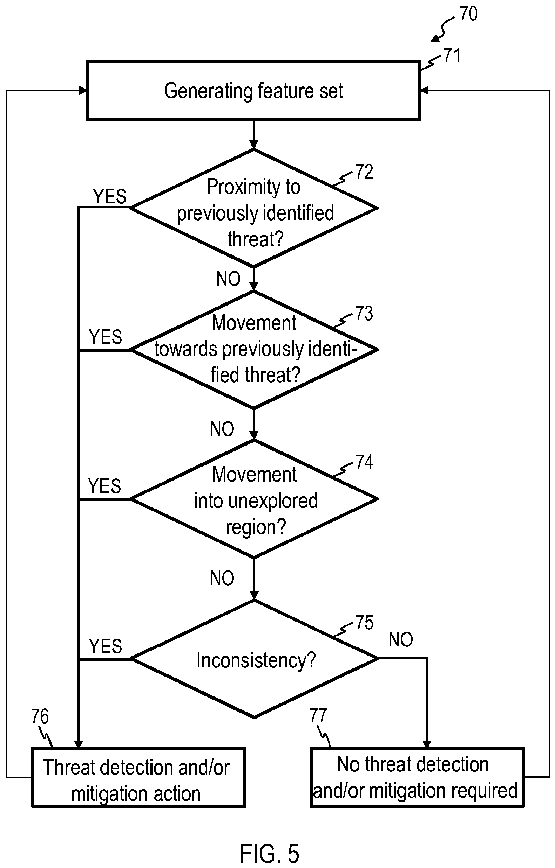

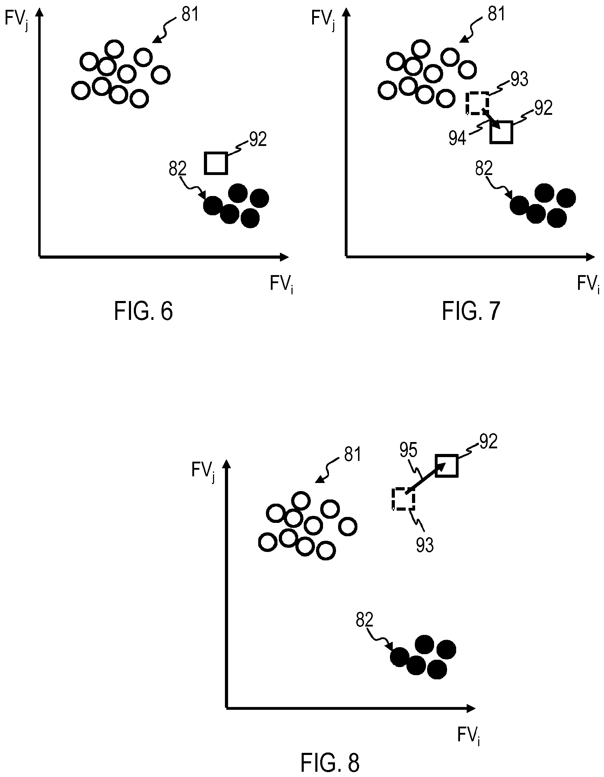

Figure 5 is a flow chart of a method 70 according to an embodiment. Various exemplary criteria for detecting a security threat will be explained with reference to Figure 5 and the schematic drawings of Figures 6 to 8. It will be appreciated that the criteria for detecting a security threat do not have to be used in combination with each other. Rather, only a subset or only a single one of the criteria may be used, and/or alternative or additional criteria may be employed for detecting a security threat.

The method 70 may be performed automatically by the analyzer 40.

At step 71, a feature set is generated. The generation of the feature set may be performed at the analyzer 40 or the data collector 31. The analyzer 40 may process measurements recorded in the physical subsystem 10 and collected by the data collector 31 into the feature set. The feature set may be an n-tuple of numerical values, where n is an integer which may be much greater than 1, e.g., in excess of 10, 100 or even in excess of 1000.

At step 72, the analyzer 40 may determine whether the feature set is located in proximity to a previously recorded feature set that is known to correspond to a threat situation. This may be the case if features are obtained from the data collector 31 that triggered an action from the IDS 25 and/or of an IPS in the past, i.e., the features are closest to a feature set associated with an IDS security event. Different ways may be used to determine proximity in feature space. For illustration, a metric in feature space or a nearest-neighbor classification may be employed.

Figure 6 schematically illustrates a two-dimensional cross-section of a higher-dimensional feature space. Only two coordinate axes are schematically illustrated. Empty circles 81 represent previously recorded feature sets that did not trigger an action from the IDS 25 and/or of an IPS in the past. Full circles 82 represent previously recorded feature sets that triggered an action from the IDS 25 and/or of an IPS in the past.

The feature set 92 corresponds to the most recent feature set of the physical subsystem 10. If the feature set 92 is closest to feature sets 82 that triggered an action from the IDS 25 and/or of an IPS in the past, this is considered to be a security threat. A threat indication may be output to the monitoring station 52 at step 76.

At step 73, the analyzer 40 may determine whether the feature set moves towards a region in feature space which is known to correspond to states that previously triggered an action from the IDS 25 and/or of an IPS in the past, this is considered to be a security threat. This allows security threats to be identified in a predictive manner.

The analyzer 40 may determine a direction of the movement of a point in feature space to determine whether it moves towards a region in feature space that contains feature sets that triggered an action from the IDS 25 and/or of an IPS in the past.

Figure 7 schematically illustrates a two-dimensional cross-section of a higher-dimensional feature space to illustrate this criterion. As a function of time, the feature set moved from an older feature set 93 (e.g., in the preceding cycle of a cyclic operation) to a current feature set 92. A movement direction 94 is directed towards a region in feature space that contains feature sets 82 that triggered an action from the IDS 25 and/or of an IPS in the past. This is considered to be a security threat. A threat indication may be output to the monitoring station 52 at step 76.

The threat detection at step 73 and as further illustrated in Figure 7 may allow threats to be detected based on changes in the physical subsystem 10, even when the system state as such is still a secure system state. It is the movement towards an insecure system state that triggers a notification to the monitoring station 52.

In this case, features moving towards any recorded state which is associated with an IDS security event are indicative of a possible upcoming threat. This information is sent to the monitoring station 52.

At step 74, the analyzer 40 may determine whether the feature set moves towards a region in feature space which does not include any previously recorded feature sets. This allows security threats to be identified in a predictive manner.

The analyzer 40 may determine a direction of the movement of a point in feature space to determine whether it moves towards a region in feature space that does not include any previously recorded feature sets.

Figure 8 schematically illustrates a two-dimensional cross-section of a higher-dimensional feature space to illustrate this criterion. As a function of time, the feature set moved from an older feature set 93 (e.g., in the preceding cycle of a cyclic operation) to a current feature set 92. A movement direction 95 is directed towards a region in feature space that does not contain previously recorded feature sets. This is considered to be a security threat. A threat indication may be output to the monitoring station 52 at step 76.

The threat detection at step 74 and as further illustrated in Figure 8 may allow threats to be detected based on changes in the physical subsystem 10, even when the system state as such is still a secure system state. It is the movement towards an unknown system state that triggers a notification to the monitoring station 52.

In this case, the security threat is detected when features are obtained that are away or moving away from any recorded state, i.e., the distance to the closest feature set is larger than a threshold according to a given metric compared to typical feature set distances or at least consistently growing with subsequent observations. Once the deviation reaches a certain threshold, e.g., the deviation is a certain percentage larger than the average or median distance or the deviation has increased continuously for a given number of measurements, the analyzer 40 reports the observation to the monitoring station 52.

At step 74, the analyzer 40 may determine whether the feature set is inconsistent with the security events received from the security event logger 32. If an inconsistency is detected, a threat detection indication may be output at step 76.

If neither one of the criteria for detecting a potential threat is fulfilled, the method may refrain from outputting a threat detection indication at step 77. The feature set may be recorded, possibly in association with user interactions, for use in machine learning.

The method may return to step 71.

When employing the criteria explained with reference to steps 72 and 73, the system reached or is approaching a state that was considered abnormal or suspicious before and is therefore reported. When employing the criteria explained with reference to step 74, either a rapid or slow but measureable change in the physical process is observed, which may be the result of an attack as there is no indication in past data that this is normal behavior. An operator may conclude that this is indeed a new normal state. The analyzer 40 can include this information in its model, using machine learning, which will classify similar features as normal in the future. When employing the criteria explained with reference to step 75, an attacker may have modified the security events to hide the attack against the physical subsystem. The analyzer 40 can still detect the attack because the changed physical features obtained from the data collector 31 reveal that other security events would be expected.

In order to further improve system security, the IDS 25, data collector 31, and analyzer 40 are independent devices, ideally run different software up to the operating system level, and require different credentials to access the respective devices. This causes the required effort to attack the system to grow. If the data collector 31 and analyzer 40 are not compromised and the analyzer 40 has been trained sufficiently, even zero-day attacks against components of the physical subsystem 10 and the IDS 25 can be detected as described above.

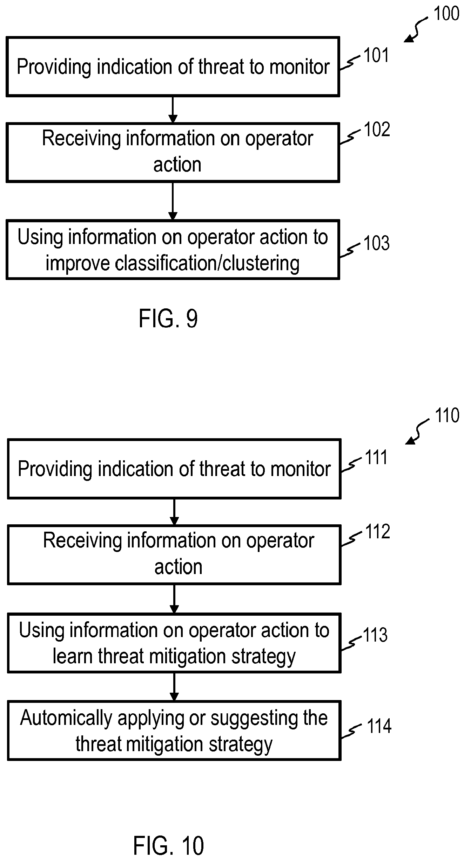

Furthermore, the analyzer 40 can learn suitable mitigation strategies. Actions taken by operators after a critical condition occurs can be fed to a machine learning algorithm in the analyzer 40, e.g., a recurrent neural network. The learnt model can be used to suggest appropriate measures when another critical situation occurs. Machine learning may not only be used to suggest appropriate measures when a critical situation occurs, but also for improving the threat detection, as will be explained with reference to Figures 9 and 10.

Figure 9 is a flow chart of a method 100 according to an embodiment. The method 100 may be performed automatically by the analyzer 40.

At step 101, an indication of a threat is provided by the analyzer 40 to monitoring station 101.

At step 102, information on an operator action taken in response to the threat detection output via monitoring station 101 is output.

At step 103, the information on the operator action is used by the analyzer 40 to train a classification and/or clustering technique. For illustration, a previously unknown state of the physical subsystem 10 may be learnt to correspond to a normal operating condition if the operator action at the monitoring station 52 indicates that this is a normal operating condition. The risk of incorrect threat detection can be reduced.

Figure 10 is a flow chart of a method 110 according to an embodiment. The method 110 may be performed automatically by the analyzer 40.

At step 111, an indication of a threat is provided by the analyzer 40 to monitoring station 101.

At step 112, information on an operator action taken in response to the threat detection output via monitoring station 101 is output.

At step 113, the information on the operator action is used by the analyzer 40 to learn possible threat mitigation strategies. Machine learning may be employed to learn possible threat mitigation strategies.

At step 114, the threat mitigation strategy may be suggested or may be automatically implemented when a feature set that previously triggered a certain user action to mitigate a threat situation is encountered again.

Various effects and advantages are attained by the methods, devices, and systems according to embodiments. For illustration, threat detection is improved by reducing the number of false negatives. Thread mitigation can be improved by proposing transition options to return the system back to a normal state. Attacks that would not be detected by traditional intrusion detection systems alone can be detected.

The operation of a system, such as a substation or other power system or of an industrial system, is made more secure and, by extension, safer. Severe system attacks are harder to carry out.

While the invention has been described in detail in the drawings and foregoing description, such description is to be considered illustrative or exemplary and not restrictive. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. An analyzer (40) operative to perform threat detection for a system that comprises a physical subsystem (10) having a plurality of controllable devices (11, 12) and a cyber subsystem (20) associated with the physical subsystem (10), the analyzer (40) comprising:
at least one interface operative to receive
- cyber security information from an intrusion detection system (25) associated with the cyber subsystem (20) and
- physical subsystem information related to the physical subsystem (10); and
at least one integrated circuit coupled to the at least one interface and operative to process, in combination, the cyber security information and the physical subsystem information to perform the threat detection; wherein the analyzer (40) is operative to determine related sets of features from a data collector (31), the data collector (31) being adapted to collect information about the physical subsystem (10) and to forward this information to the analyser (40); and
the analyzer (40) is operative to report results of the threat detection in response to any one or any combination of the following:
- a feature set has a minimum distance to a feature set that is known to have a security threat, the distance between feature sets being determined using a distance metric in a feature space spanned by the variables of the feature sets;
- a point in feature space representing the feature set moves, as a function of time, in a direction towards a point in feature space representing a feature set that is known to have a security threat;
- a point in feature space associated with the feature set moves, as a function of time, in a direction away from all points in feature space representing previously recorded feature sets;
- the feature set is inconsistent with a cyber security status.

2. The analyzer of claim 1, wherein the at least one integrated circuit is operative to process the feature set that is based on the physical subsystem information and the cyber security status derived from the cyber subsystem information to perform the threat detection.

3. The analyzer of claim 2, wherein the at least one integrated circuit is operative to perform a state classification based on the feature set to perform the threat detection.

4. The analyzer of claim 3, wherein the at least one integrated circuit is operative to execute a machine learning algorithm to continually update, during ongoing operation of the system, a state classification process that is applied to the feature set.

5. The analyzer of any one of claims 2 to 4, wherein the at least one integrated circuit is operative to perform a cluster analysis based on the feature set and the cyber security status to perform the threat detection.

6. The analyzer of claim 5, wherein the at least one integrated circuit is operative to execute a machine learning algorithm to continually update, during ongoing operation of the system, a cluster analysis process that is applied to the feature set and the cyber security status.

7. The analyzer of any one of the claims 2 to 6, wherein the at least one integrated circuit is operative to report the results of the threat detection to a monitoring station of the system.

8. The analyzer of any one of the preceding claims, wherein the at least one integrated circuit is operative to process, in combination, the cyber security information and the physical subsystem information to identify measures for mitigating a detected threat.

9. A system, comprising:
a physical subsystem (10) having a plurality of controllable devices (11, 12);
a data collector (31) operative to collect physical subsystem information related to the physical subsystem (10);
a cyber subsystem (20) associated with the physical subsystem (10);
an intrusion detection system (25) operative to detect cyber security information of the cyber subsystem (20); and
the analyzer (40) according to any one of the preceding claims, wherein the at least one interface of the analyzer (40) is communicatively coupled to the data collector (31).

10. The system of claim 9, further comprising a security event logger coupled to the intrusion detection system and to a database that stores the cyber security information, wherein the at least one interface of the analyzer is communicatively coupled to the intrusion detection system and/or the database.

11. The system of claim 9 or claim 10, wherein the cyber subsystem is an industrial automation control system comprising at least one IED.

12. The system of any one of claims 9 to 11, wherein:
the physical subsystem is an industrial system and the cyber subsystem is an industrial automation control system; or
the physical subsystem is an electric power generation and/or distribution system and the cyber subsystem comprises a communication network interconnecting controllers and sensors of the electric power generation and/or distribution system; or
the physical subsystem is a power substation and the cyber subsystem comprises a substation automation system.

13. The system of any one of claims 9 to 12, wherein the data collector and analyzer are independent computing devices having different operating systems.

14. A method of performing threat detection for a system that comprises a physical subsystem (10) having a plurality of controllable devices (11, 12) and a cyber subsystem (20) associated with the physical subsystem (10), the method comprising:
receiving, by an analyser (40),
- cyber security information from an intrusion detection system (25) associated with the cyber subsystem (20) and
- physical subsystem information associated with the physical subsystem (10); and
processing, by the analyser (40), according to any of claims 1 to 8, the cyber security information and the physical subsystem information in combination to perform the threat detection.

## Patentansprüche

1. Analysator (40) zum Durchführen von Bedrohungserkennung für ein System, das ein physisches Teilsystem (10) mit einer Vielzahl von steuerbaren Vorrichtungen (11, 12) und ein dem physischen Teilsystem (10) zugeordnetes Cyber-Teilsystem (20) umfasst, wobei der Analysator (40) folgende Elemente umfasst:
mindestens eine Schnittstelle, die in der Lage ist, folgende Informationen zu empfangen:
- Cyber-Sicherheitsinformationen von einem dem Cyber-Teilsystem (20) zugeordneten Angriffserkennungssystem (25) und
- Informationen über das physische Teilsystem, die sich auf das physische Teilsystem (10) beziehen; und mindestens eine integrierte Schaltung, die mit der mindestens einen Schnittstelle gekoppelt ist und in der Lage ist, die Cyber-Sicherheitsinformationen und die Informationen über das physische Teilsystem in Kombination zum Durchführen der Bedrohungserkennung zu verarbeiten; wobei der Analysator (40) in der Lage ist, verwandte Sätze von Merkmalen von einem Datensammler (31) zu bestimmen, wobei der Datensammler (31) dazu eingerichtet ist, Informationen über das physische Teilsystem (10) zu sammeln und diese Informationen an den Analysator (40) weiterzuleiten; und
der Analysator (40) in der Lage ist, Ergebnisse der Bedrohungserkennung als Reaktion auf einen beliebigen oder eine beliebige Kombination der folgenden Punkte zu melden:
- ein Merkmalssatz hat einen minimalen Abstand zu einem Merkmalssatz, von dem bekannt ist, dass er eine Sicherheitsbedrohung aufweist, wobei der Abstand zwischen Merkmalssätzen unter Verwendung einer Abstandsmetrik in einem durch die Variablen der Merkmalssätze aufgespannten Merkmalsraum bestimmt wird;
- ein Punkt im Merkmalsraum, der die Merkmalsmenge repräsentiert, bewegt sich in Abhängigkeit von der Zeit in eine Richtung zu einem Punkt im Merkmalsraum, der eine Merkmalsmenge repräsentiert, von der bekannt ist, dass sie eine Sicherheitsbedrohung aufweist;
- ein Punkt im Merkmalsraum, der dem Merkmalssatz zugeordnet ist, bewegt sich als Funktion der Zeit in eine Richtung weg von allen Punkten im Merkmalsraum, die zuvor aufgezeichnete Merkmalssätze repräsentieren;
- der Merkmalssatz ist nicht mit einem Cyber-Sicherheitsstatus vereinbar.

2. Analysator nach Anspruch 1, wobei die mindestens eine integrierte Schaltung in der Lage ist, den Merkmalssatz zu verarbeiten, der auf den Informationen über das physische Teilsystem und dem aus den Informationen über das Cyber-Teilsystem abgeleiteten Cyber-Sicherheitsstatus basiert, zu dem Zweck, die Bedrohungserkennung durchzuführen.

3. Analysator nach Anspruch 2, wobei die mindestens eine integrierte Schaltung in der Lage ist, eine Zustandsklassifizierung auf der Grundlage des Merkmalssatzes zum Durchführen der Bedrohungserkennung durchzuführen.

4. Analysator nach Anspruch 3, wobei die mindestens eine integrierte Schaltung in der Lage ist, einen Maschinenlernalgorithmus auszuführen, zu dem Zweck, während des laufenden Betriebs des Systems einen Zustandsklassifizierungsprozess, der auf den Merkmalssatz angewendet wird, kontinuierlich zu aktualisieren.

5. Analysator nach einem der Ansprüche 2 bis 4, wobei die mindestens eine integrierte Schaltung in der Lage ist, eine Clusteranalyse auf der Grundlage des Merkmalssatzes und des Cyber-Sicherheitsstatus zum Durchführen der Bedrohungserkennung durchzuführen.

6. Analysator nach Anspruch 5, wobei die mindestens eine integrierte Schaltung in der Lage ist, einen Maschinenlernalgorithmus auszuführen, zu dem Zweck, während des laufenden Betriebs des Systems einen Clusteranalyseprozess kontinuierlich zu aktualisieren, der auf den Merkmalssatz und den Cyber-Sicherheitsstatus angewendet wird.

7. Analysator nach einem der Ansprüche 2 bis 6, wobei die mindestens eine integrierte Schaltung in der Lage ist, die Ergebnisse der Bedrohungserkennung an eine Überwachungsstation des Systems zu melden.

8. Analysator nach einem der vorhergehenden Ansprüche, wobei die mindestens eine integrierte Schaltung in der Lage ist, die Cyber-Sicherheitsinformationen und die Informationen über das physische Teilsystem in Kombination zum Identifizieren von Maßnahmen zum Abschwächen einer erkannten Bedrohung zu verarbeiten.

9. System, umfassend:
ein physisches Teilsystem (10) mit einer Vielzahl von steuerbaren Vorrichtungen (11, 12);
einen Datensammler (31), der in der Lage ist, Informationen über das physische Teilsystem (10) zu sammeln;
ein Cyber-Teilsystem (20), das dem physischen Teilsystem (10) zugeordnet ist;
ein Angriffserkennungssystem (25), das in der Lage ist, Cyber-Sicherheitsinformationen des Cyber-Subsystems (20) zu erkennen; und
den Analysator (40) nach einem der vorhergehenden Ansprüche, wobei die mindestens eine Schnittstelle des Analysators (40) mit dem Datensammler (31) kommunikativ gekoppelt ist.

10. System nach Anspruch 9, ferner umfassend einen Sicherheitsereignisprotokollierer, der mit dem Angriffserkennungssystem und einer Datenbank gekoppelt ist, die die Cyber-Sicherheitsinformationen speichert, wobei die mindestens eine Schnittstelle des Analysators kommunikativ mit dem Angriffserkennungssystem und/oder der Datenbank gekoppelt ist.

11. System nach Anspruch 9 oder Anspruch 10, wobei das Cyber-Teilsystem ein Steuerungssystem für die industrielle Automatisierung ist, das mindestens ein IED umfasst.

12. System nach einem der Ansprüche 9 bis 11, wobei:
das physische Teilsystem ein industrielles System und das Cyber-Teilsystem ein Steuerungssystem für die industrielle Automatisierung ist; oder
das physische Teilsystem ein Elektrizitätserzeugungs- und/oder -verteilungssystem ist und das Cyber-Teilsystem ein Kommunikationsnetz umfasst, das Steuerungen und Sensoren des Elektrizitätserzeugungs- und/oder - verteilungssystems miteinander verbindet; oder
das physische Teilsystem ein Umspannwerk ist und das Cyber-Teilsystem ein Automatisierungssystem für das Umspannwerk umfasst.

13. System nach einem der Ansprüche 9 bis 12, wobei der Datensammler und der Analysator unabhängige Rechenvorrichtungen mit unterschiedlichen Betriebssystemen sind.

14. Verfahren zum Durchführen von Bedrohungserkennung für ein System, das ein physisches Teilsystem (10) mit einer Vielzahl von steuerbaren Vorrichtungen (11, 12) und ein dem physischen Teilsystem (10) zugeordnetes Cyber-Teilsystem (20) umfasst, wobei das Verfahren folgende Vorgänge umfasst:
Empfangen, durch einen Analysator (40), von folgenden Informationen:
- Cyber-Sicherheitsinformationen von einem dem Cyber-Teilsystem (20) zugeordneten Angriffserkennungssystem (25) und
- Informationen über das physische Teilsystem, die dem physischen Teilsystem (10) zugeordnet sind; und Verarbeiten, durch den Analysator (40) nach einem der Ansprüche 1 bis 8, der Cyber-Sicherheitsinformationen und der Informationen über das physische Teilsystem in Kombination zum Durchführen der Bedrohungserkennung.

## Revendications

1. Analyseur (40) destiné à effectuer une détection de menaces pour un système qui comprend un sous-système physique (10) ayant une pluralité de dispositifs contrôlables (11, 12) et un sous-système cyber (20) associé au sous-système physique (10), l'analyseur (40) comprenant :
au moins une interface destinée à recevoir :
- des informations de cybersécurité provenant d'un système de détection d'intrusion (25) associé au sous-système cyber (20), et
- des informations de sous-système physique associées au sous-système physique (10) ; et
au moins un circuit intégré couplé à l'au moins une interface et destiné à traiter, de manière combinée, les informations de cybersécurité et les informations de sous-système physique pour effectuer la détection des menaces, où l'analyseur (40) est destiné à déterminer des ensembles connexes de caractéristiques à partir d'un collecteur de données (31), le collecteur de données (31) étant adapté pour collecter des informations concernant le sous-système physique (10) et pour transmettre ces informations à l'analyseur (40) ; et
l'analyseur (40) est destiné à rapporter les résultats de la détection de menaces en réponse à l'un quelconque ou à toute combinaison quelconque des éléments suivants :
- un ensemble de caractéristiques présente une distance minimale par rapport à un ensemble de caractéristiques connu pour présenter une menace pour la sécurité, la distance entre les ensembles de caractéristiques étant déterminée à l'aide d'une métrique de distance dans un espace de caractéristiques couvert par les variables des ensembles de caractéristiques ;
- un point dans l'espace de caractéristiques représentant l'ensemble de caractéristiques se déplace, en fonction du temps, dans une direction vers un point dans l'espace de caractéristiques représentant un ensemble de caractéristiques qui est connu pour présenter une menace pour la sécurité ;
- un point dans l'espace de caractéristiques associé à l'ensemble de caractéristiques se déplace, en fonction du temps, dans une direction s'éloignant de tous les points dans l'espace de caractéristiques représentant des ensembles de caractéristiques précédemment enregistrés ;
- l'ensemble de caractéristiques est incompatible avec un état de cybersécurité.

2. Analyseur selon la revendication 1, dans lequel l'au moins un circuit intégré est destiné à traiter l'ensemble de caractéristiques qui est basé sur les informations du sous-système physique et l'état de cybersécurité dérivé des informations du sous-système cyber pour effectuer la détection de menaces.

3. Analyseur selon la revendication 2, dans lequel l'au moins un circuit intégré est destiné à effectuer une classification d'état basée sur l'ensemble de caractéristiques pour effectuer la détection de menaces.

4. Analyseur selon la revendication 3, dans lequel l'au moins un circuit intégré est destiné à exécuter un algorithme d'apprentissage automatique pour mettre à jour de manière continue, pendant le fonctionnement continu du système, un processus de classification d'état qui est appliqué à l'ensemble de caractéristiques.

5. Analyseur selon l'une quelconque des revendications 2 à 4, dans lequel l'au moins un circuit intégré est destiné à effectuer une analyse de groupe basée sur l'ensemble de caractéristiques et l'état de cybersécurité pour effectuer la détection de menaces.

6. Analyseur selon la revendication 5, dans lequel l'au moins un circuit intégré est destiné à exécuter un algorithme d'apprentissage automatique pour mettre à jour de manière continue, pendant le fonctionnement continu du système, un processus d'analyse de groupe qui est appliqué à l'ensemble de caractéristiques et à l'état de cybersécurité.

7. Analyseur selon l'une quelconque des revendications 2 à 6, dans lequel l'au moins un circuit intégré est destiné à signaler les résultats de la détection de menaces à une station de surveillance du système.

8. Analyseur selon l'une quelconque des revendications précédentes, dans lequel l'au moins un circuit intégré est destiné à traiter, de manière combinée, les informations de cybersécurité et les informations de sous-système physique pour identifier les mesures d'atténuation d'une menace détectée.

9. Système, comprenant :
un sous-système physique (10) ayant une pluralité de dispositifs contrôlables (11, 12) ;
un collecteur de données (31) destiné à collecter des informations de sous-système physique associées au sous-système physique (10) ;
un sous-système cyber (20) associé au sous-système physique (10) ;
un système de détection d'intrusion (25) destiné à détecter des informations de cybersécurité du sous-système cyber (20) ; et
l'analyseur (40) selon l'une quelconque des revendications précédentes, où l'au moins une interface de l'analyseur (40) est couplée de manière communicative au collecteur de données (31).

10. Système selon la revendication 9, comprenant en outre un enregistreur d'événements de sécurité couplé au système de détection d'intrusion et à une base de données qui stocke les informations de cybersécurité, où l'au moins une interface de l'analyseur est couplée de manière communicative au système de détection d'intrusion et/ou à la base de données.

11. Système selon la revendication 9 ou la revendication 10, dans lequel le sous-système cyber est un système de commande d'automatisation industrielle comprenant au moins un lED.

12. Système selon l'une quelconque des revendications 9 à 11, dans lequel :
le sous-système physique est un système industriel et le sous-système cyber est un système de commande d'automatisation industrielle ; ou
le sous-système physique est un système de production et/ou de distribution d'énergie électrique et le sous-système cyber comprend un réseau de communication interconnectant des contrôleurs et des capteurs du système de production et/ou de distribution d'énergie électrique ; ou
le sous-système physique est une sous-station électrique et le sous-système cyber comprend un système d'automatisation de sous-station.

13. Système selon l'une quelconque des revendications 9 à 12, dans lequel le collecteur de données et l'analyseur sont des dispositifs informatiques indépendants ayant des systèmes d'exploitation différents.

14. Procédé destiné à effectuer une détection de menaces pour un système qui comprend un sous-système physique (10) ayant une pluralité de dispositifs contrôlables (11, 12) et un sous-système cyber (20) associé au sous-système physique (10), le procédé comprenant les étapes suivantes :
recevoir, par un analyseur (40) :
- des informations de cybersécurité provenant d'un système de détection d'intrusion (25) associé au sous-système cyber (20) ; et
- des informations de sous-système physique associées au sous-système physique (10) ; et
traiter, par l'analyseur (40), selon l'une quelconque des revendications 1 à 8, des informations de cybersécurité et des informations de sous-système physique de manière combinée pour effectuer la détection de menaces.
